# DEMANDE DE BREVET EUROPEEN

(11) **EP 0 728 642 A1**
(43) Date de publication de la demande: **28.08.1996**
(21) Numéro de dépôt: 96102474.2
(22) Date de dépôt: 19.02.1996
(51) Int. Cl.: B60S 1/38

(54) **Balai d'essuie-glace comportant des moyens de fixation perfectionnés d'un accessoire tel qu'un déflecteur aérodynamique**

(30) Priorité: 21.02.1995 FR 9502087
(71) Demandeur: VALEO SYSTEMES D'ESSUYAGE, 78321 La Verrière (FR)
(72) Inventeur: Giraud, Frédéric, 63000 Clermond-Ferrand (FR); Teindas, Jean-Louis, 63190 Ravel (FR)
(74) Mandataire: Gamonal, Didier

(57) **Abrégé**

L'invention propose un balai d'essuie-glace (10) de véhicule automobile du type comportant une structure de support d'une raclette d'essuyage et le long duquel s'étend un accessoire (30) comportant un corps allongé relié à la structure de support (16, 18, 22) par des moyens de fixation (32) qui s'étendent transversalement entre l'accessoire (30) et le balai d'essuie-glace, caractérisé en ce que les moyens de fixation comportent au moins une pièce intermédiaire de liaison (32) fixée au balai, ou à l'accessoire, et qui est susceptible d'occuper au moins deux positions (P1, P2) décalées longitudinalement (D) par rapport à l'accessoire (30), ou au balai respectivement.

## Description

La présente invention concerne un balai d'essuie-glace de véhicule automobile.

L'invention concerne plus particulièrement un balai d'essuie-glace du type comportant une structure de support, gui est notamment articulée en vue d'assurer une répartition de l'effort d'essuyage, d'une raclette d'essuyage et du type le long duquel s'étend un accessoire comportant un corps allongé relié à la structure de support par des moyens de fixation qui s'étendent transversalement entre l'accessoire et le balai d'essuie-glace.

Un tel accessoire est par exemple un déflecteur aérodynamique qui est monté le long d'une des faces latérales du balai d'essuie-glace pour améliorer les performances d'essuyage du balai.

L'accessoire peut également être constitué par une rampe d'arrosage de la vitre à essuyer en liquide de lavage, qui permet de projeter sur la vitre, dans la zone directement balayée par la raclette d'essuyage, du produit de lavage afin d'améliorer la qualité de l'essuyage.

Les moyens de fixation connus pour un tel type d'accessoire sont caractérisés par le fait qu'un seul accessoire ne peut être fixé que sur un seul balai de dimensions correspondantes auquel il est apparié.

Etant donné le grand nombre de modèles différents de véhicules automobiles, ainsi que le nombre de modèles différents d'essuie-glace pour un même modèle de véhicule, les moyens connus de fixation nécessitent donc de réaliser autant d'accessoires qu'il existe de modèle de balai d'essuie-glace, chacun de ces accessoires possédant des moyens de fixation, généralement agencés au voisinage des extrémités longitudinales opposées de l'accessoire, qui ne permettent son montage que sur un seul balai d'essuie-glace de dimensions correspondantes.

La présente invention a pour but de proposer une nouvelle conception d'un balai d'essuie-glace qui permet de remédier à cet inconvénient.

Dans ce but, l'invention propose un balai d'essuie-glace du type mentionné précédemment, caractérisé en ce que les moyens de fixation comportent au moins une pièce intermédiaire de fixation portée par le balai d'essuie-glace, ou à l'accessoire, et qui est susceptible d'occuper au moins deux positions décalées longitudinalement par rapport à l'accessoire, ou au balai respectivement.

Selon d'autres caractéristiques de l'invention :
- la pièce intermédiaire de fixation comporte des moyens de fixation avec le balai d'essuie-glace et des moyens de montage pour la liaison avec l'accessoire ;
- la patte de fixation est fixée sur un axe transversal d'articulation de la structure articulée de support de la raclette d'essuyage ;
- la structure articulée comporte au moins un composant allongé de section transversale en forme de U renversé, constitué par deux ailes latérales reliées par un dos, et la patte de fixation est une plaque qui est reçue entre les ailes parallèles et qui est traversée par l'axe d'articulation qui traverse les ailes parallèles ;
- la pièce intermédiaire de liaison comporte des moyens pour empêcher son pivotement autour de l'axe d'articulation ;
- la pièce intermédiaire de liaison comporte une languette de butée qui s'étend en regard d'un bord longitudinal inférieur d'une des ailes latérales pour empêcher le pivotement de la pièce de liaison autour de l'axe d'articulation ;
- la patte de montage est reçue dans un logement de l'accessoire dans lequel elle est susceptible d'occuper au moins deux positions décalées longitudinalement et il est prévu des moyens de verrouillage en position de la patte de montage dans le logement ;
- la patte de montage est une plaque reçue dans une fente longitudinale du corps de l'accessoire et les moyens de verrouillage comportent un doigt transversal qui s'étend à travers la patte de montage et à travers au moins un trou dé positionnement formé dans le corps de l'accessoire ;
- le doigt transversal de verrouillage est constitué par une extrémité libre de l'axe d'articulation ;
- le logement comporte au moins deux empreintes de forme complémentaire de celle de la patte de montage et qui sont décalées longitudinalement ;
- la patte de montage est fixée au corps de l'accessoire par au moins un pion reçu dans au moins un trou de positionnement ;
- le pion est emboîté élastiquement dans le trou de positionnement ;
- le pion s'étend selon une direction transversale;
- le pion s'étend selon une direction perpendiculaire à la direction transversale ;
- la patte de montage comporte un pion qui est reçu dans l'un ou l'autre d'au moins deux trous de positionnement formés dans le corps de l'accessoire et qui sont décalés longitudinalement ;
- la patte de montage comporte un trou de positionnement dans lequel est reçu l'un ou l'autre d'au moins deux pions portés par le corps de l'accessoire et qui sont décalés longitudinalement ;
- il est prévu des moyens pour empêcher le pivotement de la patte de liaison par rapport au corps de l'accessoire, autour de l'axe du pion ;
- il est prévu deux pièces de fixation agencées au voisinage des deux extrémités longitudinales opposées de l'accessoire ;
- l'accessoire est un déflecteur aérodynamique ;
- l'accessoire est une rampe d'arrosage.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique latérale en élévation d'un balai d'essuie-glace de grande longueur réalisé conformément aux enseignements de l'invention ;
- la figure 2 est une vue similaire à celle de la figure 1 qui illustre un balai d'essuie-glace de plus petite longueur ;
- la figure 3 est une vue latérale en élévation d'un déflecteur aérodynamique, réalisé conformément aux enseignements de l'invention, qui peut être monté sur l'un ou l'autre des essuie-glaces illustrés aux figures 1 et 2;
- la figure 4 est une vue de dessus de la figure 3 ;
- la figure 5 est une vue en perspective éclatée et à plus grande échelle d'un premier mode de réalisation des moyens de fixation selon l'invention d'un déflecteur aérodynamique sur la structure articulée de support du balai d'essuie-glace ;
- la figure 6 est une vue en section transversale passant par l'axe d'articulation de la figure 5 ;
- la figure 7 est une vue schématique en perspective qui illustre un second mode de réalisation des moyens de fixation ;
- la figure 8 est une vue en section transversale de la figure 7 ; et
- la figure 9 est une vue schématique en perspective qui illustre un troisième mode de réalisation des moyens de fixation.

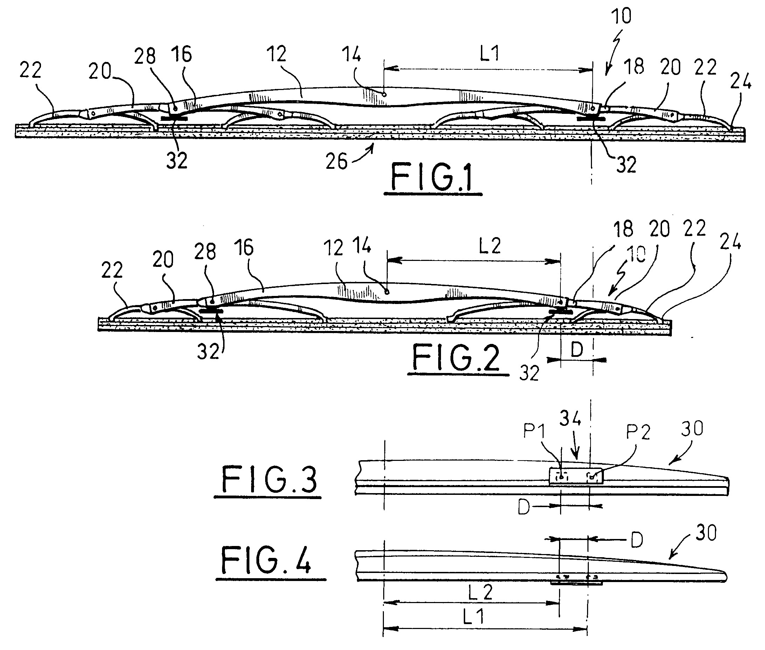

On a représenté sur la figure 1 un balai d'essuie-glace 10 constitué pour l'essentiel par un étrier principal 12 comportant un axe central 14 pour son articulation à l'extrémité libre d'un bras d'essuie-glace (non représenté).

Chacune des extrémités libres 16 de l'étrier principal 12 reçoit, de manière articulée, la partie médiane d'un palonnier intermédiaire 18 dont chacune des extrémités 20 reçoit, de manière articulée, la partie médiane d'un palonnier secondaire 22 dont les extrémités en forme de griffes 24 retiennent le talon supérieur d'une raclette d'essuyage 26.

La longueur considérée du balai d'essuie-glace 10 résulte notamment de la longueur L1 séparant l'axe 14 de l'axe 28 d'articulation d'un palonnier intermédiaire 18 à l'extrémité 16 de l'étrier principal 12.

On a représenté sur la figure 2 un balai d'essuie-glace 10 de conception similaire à celle du balai illustré sur la figure 1 mais de plus petite longueur, c'est-à-dire d'une conception dans laquelle la longueur L2 séparant l'axe 14 de l'axe 28 est inférieure à la longueur L1.

La présente invention a pour but de permettre le montage d'un seul accessoire longitudinal, par exemple d'un déflecteur aérodynamique 30 illustré schématiquement aux figures 3 et 4, indifféremment sur l'un ou l'autre des balais d'essuie-glace 10 illustrés aux figures 1 et 2.

A cet effet, chacune des deux extrémités longitudinales opposées 16 de l'étrier principal 12 est équipée d'une pièce intermédiaire de fixation 32 dont chacune est susceptible d'être reçue dans deux positions P1 ou P2 de moyens complémentaires de fixation 34 prévus sur le déflecteur aérodynamique 30, les positions P1 et P2 étant décalées longitudinalement d'une distance D égale à la différence L1 - L2.

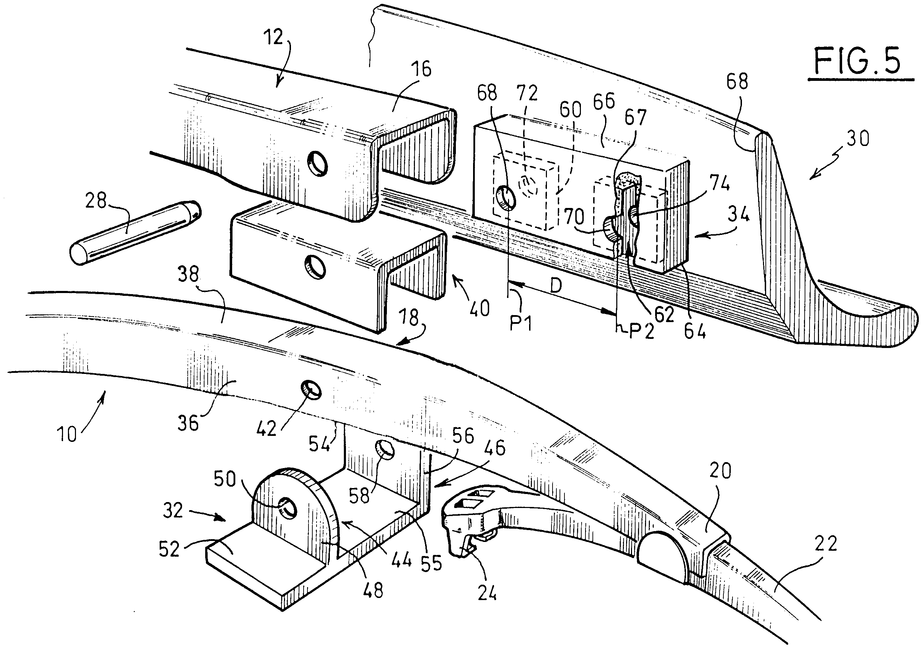

Un premier mode de réalisation des moyens de fixation est illustré sur la figure 5 sur laquelle des composants identiques ou similaires à ceux décrits en référence aux figures 1 à 4 sont désignés par les mêmes chiffres de référence.

Le palonnier intermédiaire 18, dans sa partie centrale qui est articulée à l'extrémité 16 de l'étrier principal 12 présente, en section transversale, une forme de U renversé.

Il est constitué par deux ailes latérales parallèles 36 reliées par un dos supérieur 38.

La partie médiane de l'étrier secondaire 18 est chevauchée par la partie d'extrémité 16, de forme complémentaire, de l'étrier principal 12 avec interposition d'un élément antibruit 40, selon une conception connue.

L'assemblage et l'articulation de ces composants 16, 40, 18 est assurée au moyen d'un axe transversal 28 réalisé sous la forme d'une tige qui traverse notamment des trous alignés 42 formés dans les ailes latérales de l'étrier secondaire 18.

La pièce intermédiaire de montage 32 est constituée pour l'essentiel par une patte 44 pour sa fixation sur la structure articulée de support de la raclette d'essuyage et par une patte 46 pour son montage réglable dans les moyens complémentaires 34 de montage prévus sur le déflecteur 30.

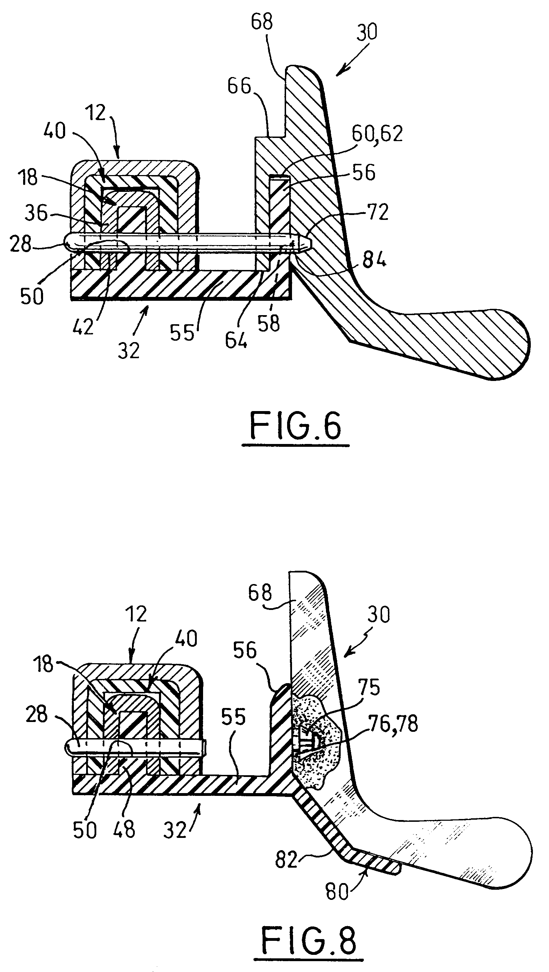

La patte de fixation 44 est une pièce en forme de plaque 48 dont l'épaisseur est telle qu'elle peut être reçue , comme on peut le voir sur la figure 6, entre les faces en vis-à-vis des ailes latérales 36.

La plaque 48 constitutive de la patte de fixation 44 comporte en son centre un trou 50 qui, en position de fixation, est aligné avec les trous 42 et permet le passage du corps de l'axe d'articulation 28.

La pièce intermédiaire de fixation 32 comporte une languette de butée 52 qui s'étend transversalement dans un plan perpendiculaire à celui de la plaque 48 et qui, dans la position montée illustrée sur la figure 6, s'étend en regard du bord longitudinal inférieur 54 de l'aile latérale 36 pour limiter ou empêcher le pivotement relatif de la pièce de fixation 32 par rapport à l'étrier intermédiaire 18.

La patte de montage 46 est également réalisée sous la forme d'une plaque 56 sensiblement parallèle à la plaque 48 à laquelle elle est reliée par une plaque horizontale de liaison 55 qui s'étend selon la direction transversale.

La pièce intermédiaire de liaison 32 peut avantageusement être réalisée par moulage en matière plastique.

La plaque 56 de la patte de montage 46 comporte en son centre un trou 58 qui est aligné avec le trou 50 de la patte de fixation 44.

Les moyens complémentaires 34 comportent deux empreintes 60 et 62 dont chacune présente un profil complémentaire de celui de la plaque 56 de la patte de montage 46 et dont chacune est ouverte dans la face inférieure 64 d'une partie en surépaisseur 66 réalisée venue de matière par moulage sur la face latérale 68 du déflecteur aérodynamique 30 qui s'étend le long de la face latérale correspondante du balai d'essuie-glace.

Chacune des empreintes 60, 62 est délimitée transversalement par une cloison 67 qui comporte deux trous débouchants 68, 70 dont chacun est associé à l'une des empreintes 60, 62.

En alignement avec le trou 68, 70, le fond de l'empreinte correspondante comporte un trou borgne aligné 72, 74.

L'empreinte 60 permet le montage de la pièce de fixation 32 dans la position P1 tandis que l'empreinte 62 permet le montage dans la position P2.

Sur la figure 6, on a par exemple représenté la pièce de montage 32 en position P1.

En position montée, comme on le voit sur la figure 6, l'extrémité libre 84 de la tige formant axe d'articulation 28 traverse le trou 58, le trou 68 et est reçue dans le trou borgne 72.

Ainsi, la patte de montage 56 en position dans son empreinte 60 est immobilisée verticalement et elle ne peut plus sortir de cette empreinte.

L'assemblage des différents composants, et notamment du déflecteur 30 est effectué en mettant en place l'étrier intermédiaire 18 avec l'élément antibruit 40 à l'intérieur de l'extrémité 16 de l'étrier principal 12 puis en introduisant la patte de montage 56 dans l'empreinte correspondante 60 ou 62 en fonction de la dimension de la structure articulée et il se termine en introduisant transversalement l'axe 28 dans les différents trous alignés de manière à assurer le montage conformément à ce qui est illustré sur la figure 6.

On décrira maintenant la variante de réalisation illustrée aux figures 7 et 8 sur lesquelles des composants identiques ou similaires à ceux décrits précédemment sont désignés par les mêmes chiffres de référence.

Dans ce mode de réalisation, la patte de montage 46 en forme de plaque 56 porte, sur sa face 57 tournée vers la face latérale 68 du déflecteur 30, un pion 75 qui est prévu pour être emboîté élastiquement dans l'un ou l'autre de deux trous de positionnement 76, 78 formés dans la face latérale 68 et qui sont décalés longitudinalement d'une distance D, comme dans le cas des trous 68 et 70 du premier mode de réalisation, pour déterminer deux positions de montage du déflecteur 30 sur la patte de liaison 32, le pion 75 étant emboîté élastiquement dans l'un ou l'autre des deux trous 76 ou 78 pour déterminer l'une ou l'autre de ces deux positions.

Comme on l'a représenté aux figures 7 et 8, la pièce intermédiaire de liaison 32 comporte également une languette 80 qui est prévue pour empêcher une rotation de la pièce 32 par rapport au déflecteur 30 et qui s'étend à cet effet sous la partie inférieure 82 du déflecteur 30 dont elle épouse le profil.

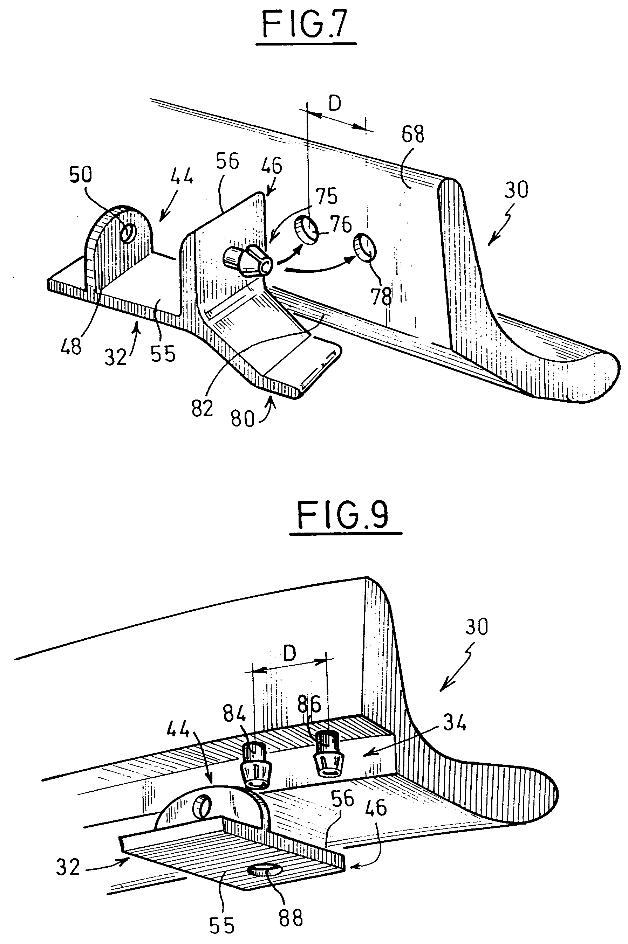

Enfin, dans le troisième mode de réalisation illustré sur la figure 9, c'est le déflecteur 30 qui comporte deux pions de fixation 84 et 86, décalés longitudinalement, et dont chacun est susceptible d'être reçu dans un seul trou de positionnement 88 formé dans la patte de fixation 56 qui, dans cet exemple de réalisation, s'étend dans un plan transversal parallèle à la direction longitudinale du déflecteur et qui est perpendiculaire à la patte de fixation 44.

## Revendications

1. Balai d'essuie-glace (10) de véhicule automobile du type comportant une structure de support d'une raclette d'essuyage et le long duquel s'étend un accessoire (30) comportant un corps allongé relié à la structure de support (16, 18, 22) par des moyens de fixation (32) qui s'étendent transversalement entre l'accessoire (30) et le balai d'essuie-glace, caractérisé en ce que les moyens de fixation comportent au moins une pièce intermédiaire de liaison (32) portée par le balai, ou à l'accessoire, et qui est susceptible d'occuper au moins deux positions (P1, P2) décalées longitudinalement (D) par rapport à l'accessoire (30), ou au balai respectivement.

2. Balai d'essuie-glace selon la revendication 1, caractérisé en ce que la pièce intermédiaire de liaison (32) comporte des moyens de fixation (44) avec le balai d'essuie-glace et des moyens de montage (46) pour la liaison avec l'accessoire (30).

3. Balai d'essuie-glace selon la revendication 2, caractérisé en ce que les moyens de fixation sont une patte de fixation (44) et les moyens de montage sont une patte de montage (46).

4. Balai d'essuie-glace selon la revendication 3, caractérisé en ce que la patte de fixation (44) est fixée sur un axe (28) transversal d'articulation de la structure articulée de support de la raclette d'essuyage.

5. Balai d'essuie-glace selon la revendication 4, caractérisé en ce que la structure articulée comporte au moins un composant allongé (18) de section transversale en forme de U renversé, constitué par deux ailes latérales (36) reliées par un dos (38), et en ce que la patte de fixation (44) est une plaque (48) qui est reçue entre les ailes parallèles (36) et qui est traversée par l'axe d'articulation (28) qui traverse (42) les ailes parallèles (36).

6. Balai d'essuie-glace selon la revendication 5, caractérisé en ce que la pièce intermédiaire de liaison (32) comporte des moyens pour empêcher son pivotement autour de l'axe d'articulation (28).

7. Balai d'essuie-glace selon l'une des revendications précédentes, caractérisé en ce que la pièce intermédiaire de fixation (32) comporte une languette de butée (52) qui s'étend en regard d'un bord longitudinal inférieur (54) d'une des ailes latérales (36) pour empêcher le pivotement de la pièce de liaison (32) autour de l'axe d'articulation (28).

8. Balai d'essuie-glace selon l'une quelconque des revendications 3 à 7, caractérisé en ce que la patte de montage (56) est reçue dans un logement (60, 62) de l'accessoire dans lequel elle est susceptible d'occuper au moins deux positions décalées longitudinalement et en ce qu'il est prévu des moyens de verrouillage en position de la patte de montage (46) dans le logement.

9. Balai d'essuie-glace selon la revendication 8, caractérisé en ce que la patte de montage (46) est une plaque (56) reçue dans une fente longitudinale du corps de l'accessoire (30) et en ce que les moyens de verrouillage comportent un doigt transversal qui s'étend à travers la patte de montage (46) et à travers au moins un trou de positionnement (68, 70) formé dans le corps de l'accessoire (30).

10. Balai d'essuie-glace selon la revendication 9 prise en combinaison avec la revendication 5, caractérisé en ce que le doigt transversal de verrouillage est constitué par une extrémité libre (84) de l'axe d'articulation (28).

11. Balai d'essuie-glace selon l'une quelconque des revendications 8 à 10, caractérisé en ce que le logement comporte au moins deux empreintes (60, 62) de forme complémentaire de celle de la patte de montage (46) et qui sont décalées longitudinalement.

12. Balai d'essuie-glace selon l'une quelconque des revendications 3 à 7, caractérisé en ce que la patte de montage (46) est fixée au corps de l'accessoire par au moins un pion (75, 84, 86) reçu dans au moins un trou de positionnement (76, 78, 88).

13. Balai d'essuie-glace selon la revendication 12, caractérisé en ce que le pion (75,76,88) est emboîté élastiquement dans le trou de positionnement (76,78,88).

14. Balai d'essuie-glace selon l'une des revendications 12 ou 13, caractérisé en ce que le pion (75) s'étend selon une direction transversale.

15. Balai d'essuie-glace selon l'une des revendications 12 ou 13, caractérisé en ce que le pion (84, 86) s'étend selon une direction perpendiculaire à la direction transversale.

16. Balai d'essuie-glace selon l'une quelconque des revendications 12 à 15, caractérisé en ce que la patte de montage (46) comporte un pion (75) qui est reçu dans l'un ou l'autre d'au moins deux trous de positionnement (76, 78) formés dans le corps de l'accessoire (30) et qui sont décalés longitudinalement.

17. Balai d'essuie-glace selon l'une quelconque des revendications 12 à 15, caractérisé en ce que la patte de montage (46) comporte un trou de positionnement (88) dans lequel est reçu l'un ou l'autre d'au moins deux pions (84, 86) portés par le corps de l'accessoire et qui sont décalés longitudinalement.

18. Balai d'essuie-glace selon l'une quelconque des revendications précédentes, caractérisé en ce qu'il est prévu deux pièces de fixation (32) agencées au voisinage des deux extrémités longitudinales opposées de l'accessoire.

19. Balai d'essuie-glace selon l'une quelconque des revendications précédentes, caractérisé en ce que l'accessoire est un déflecteur aérodynamique (30).

20. Balai d'essuie-glace selon l'une quelconque des revendications 1 à 18, caractérisé en ce que l'accessoire est une rampe d'arrosage.
